# FASCICULE DE BREVET EUROPEEN

(11) **EP 1 710 180 B1**
(45) Date de publication et mention de la délivrance du brevet: **05.10.2011**
(21) Numéro de dépôt: 06300296.8
(22) Date de dépôt: 28.03.2006
(51) Int. Cl.: B65G 69/00, F16F 1/54

(54) **Module amortisseur de chocs et butoir, notamment pour quais de chargement mettant en oeuvre de tels modules**
Stoßdämpfendes Modul und Anschlagpuffer, insbesondere für Verladerampen mit solchen Modulen
Shock damping module and buffer, particularly for loading bays, incorporating such modules

(30) Priorité: 04.04.2005 FR 0550881
(43) Date de publication de la demande: 11.10.2006
(73) Titulaire: Gouillardon Gaudry, 69007 Lyon (FR)
(72) Inventeur: Duperron, Michel, 38460 Veyssilieu (FR)
(74) Mandataire: Vuillermoz, Bruno

(56) Documents cités:
- DE-A1- 10 003 744
- DE-B- 1 206 214
- DE-B3- 10 358 041
- DE-U- 1 660 548
- DE-U- 1 684 569
- DE-U- 1 760 439
- DE-U- 1 784 505
- FR-A- 2 841 883
- GB-A- 896 762
- GB-A- 904 925
- US-A1- 2004 262 095
- US-B1- 6 341 422

## Description

### DOMAINE TECHNIQUE

L'invention concerne un butoir ou dispositif amortisseur, plus particulièrement destiné à être mis en oeuvre au niveau des quais de chargement, notamment de poids lourds, un tel butoir étant en outre susceptible d'être monté à l'arrière d'une remorque, afin d'éviter les déformations du châssis, susceptibles d'intervenir en suite de tels chocs.

Cependant, de tels butoirs pourraient également être mis en oeuvre dès lors qu'il convient d'absorber partie au moins de l'énergie cinétique résultant d'un déplacement, notamment d'un véhicule, tel que dans un garage, dans l'industrie ferroviaire, ou encore au niveau des quais fluviaux ou maritimes, et donc dans les zones portuaires.

### ETAT DE LA TECHNIQUE ANTERIEURE

De manière connue, les camions sont chargés par l'arrière. Ce faisant, lors des manoeuvres d'approche en marche arrière au niveau d'un quai de chargement, l'arrière du camion ou de la semi-remorque vient couramment heurter le bord du quai de chargement, ce dernier étant traditionnellement réalisé en béton.

Les chocs répétés inhérents à ces heurts induisent une usure prématurée du quai, et notamment de la structure en béton, et en outre, provoquent des déformations de l'arrière du camion ou de la semi-remorque.

La réfection d'un quai en béton est tout particulièrement onéreuse et ce, de manière connue. Aussi, et afin de prolonger la durée de vie de ces quais, il a été proposé de mettre en place au niveau de l'angle supérieur du quai une poutre en bois dur, ou, un bourrelet en caoutchouc, appelés défenses de quai, l'un comme l'autre de ces éléments étant destinés à amortir, à tout le moins partiellement, les chocs.

L'expérience démontre cependant que ces éléments ont une durée de vie particulièrement faible, puisque la poutre en bois se délite relativement rapidement, et le bourrelet en caoutchouc ou en élastomère se déchire également très vite, nonobstant la qualité de matériau susceptible d'être mis en oeuvre.

En effet, quand bien même la vitesse des camions est relativement faible, puisqu'ils reculent, leur masse est en revanche significative, et les lois de la physique ont démontré que ces deux paramètres entrent dans la détermination de la quantité d'énergie cinétique à absorber par le quai.

On a également proposé, par exemple dans le document WO 2004/013433, un dispositif amortisseur pour surmonter cet inconvénient.

Celui-ci est globalement constitué d'un matériau amortisseur compressible pour absorber l'impact, et d'un joint d'amortissement s'étendant au niveau de la face en regard du quai, et du véhicule, le joint étant davantage compressible que l'amortisseur lui-même.

Cependant, cette structure est relativement complexe à réaliser et surtout à mettre en oeuvre, et nécessite une adaptation aux dimensions des véhicules qui, de manière connue, ne sont pas standard.

Un butoir selon le préambule de la revendication 1 a été proposé dans le document DE-A-100 03 744.

### EXPOSE DE L'INVENTION

La présente invention a pour objectif une solution efficace de protection des quais de chargement, mais également du châssis des remorques et autres camions, simple à mettre en oeuvre, tout en étant d'un coût de fabrication réduit.

Elle vise également à réduire les conséquences du caractère répétitif des coups encaissés par le dos des chauffeurs en conséquence des heurts intervenant entre le camion et le quai, et donc à diminuer les troubles musculo-squelettiques.

Elle concerne un butoir pour quai de chargement ou pour véhicule selon la revendication 1.

Dans les faits, les profilés sont réalisés en métal.

Avantageusement, chaque module est muni d'une butée positive solidaire du profilé externe et s'étendant perpendiculairement à celui ci, et susceptible de coulisser dans un orifice ménagé au sein du profilé interne, pour venir prendre appui contre la structure à protéger, et ainsi limiter la course de débattement possible du profilé externe. Cette course est par exemple fixée à 16 millimètres.

Le matériau amortisseur est constitué d'un caoutchouc naturel ou synthétique, et dans ce dernier cas, un élastomère, typiquement réalisé en SBR (Synthetic Butadiène Rubber) d'une dureté comprise entre 60 et 70 Shore A. L'expérience démontre qu'en deçà de cette fourchette, la dureté est insuffisante pour aboutir au résultat recherché. En revanche, au-delà de cette fourchette, le matériau amortisseur devient trop dur, et n'assure donc plus correctement la fonction d'amortissement recherchée.

Dans le même ordre d'idée, on met avantageusement en oeuvre un matériau présentant un allongement à la rupture voisin de 350 %, outre une résistance à la rupture d'au moins 14 MPa.

Lesdites platines sont avantageusement traitées anti-corrosion.

Avantageusement, la périphérie du butoir ainsi constitué est obturée de manière élastique au moyen d'un soufflet, fixé respectivement à la platine supérieure et à la platine inférieure, notamment à l'aide de rivets.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 est une représentation schématique en section d'un module amortisseur dont la figure 2 est une vue du dessus.
La figure 3 est une représentation schématique en section d'une partie d'un butoir conforme à l'invention.
Les figures 4a, 4b et 4c sont des représentations schématiques en section représentant la structure de la figure 3, selon différentes charges appliquées sur celle-ci, respectivement pour une charge nulle, pour une charge intermédiaire et pour une charge maximum.
La figure 5a est une représentation schématique vue du dessus d'un butoir muni de cinq modules amortisseurs, dont la figure 5b est une vue latérale selon une direction, et la figure 5c est une vue latérale selon une direction perpendiculaire.
Les figures 6a, 6b et 6c sont des vues analogues aux figures 5a, 5b et 5c d'une autre configuration du butoir conforme à l'invention, mais mettant en oeuvre huit modules amortisseurs du type de celui décrit en relation avec les figures 1 et 2.

### DESCRIPTION DETAILLEE

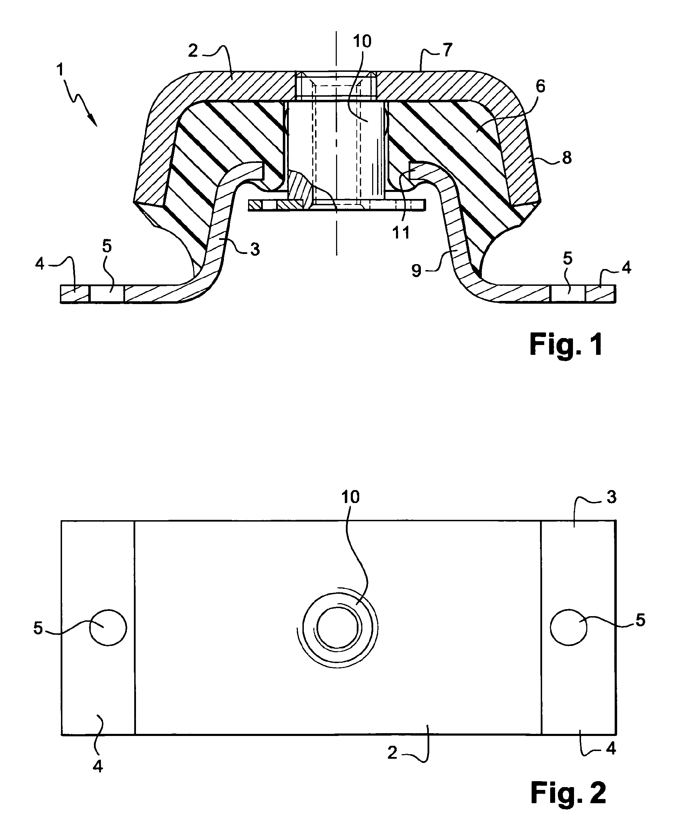

On a donc représenté en relation avec les figures 1 et 2 un module amortisseur (1).

Fondamentalement, celui-ci est constitué de deux profilés métalliques, respectivement un profilé supérieur (2) et un profilé inférieur (3). Ainsi qu'on peut bien l'observer sur la figure 1, ces deux profilés métalliques (2) et (3) s'emboîtent partiellement l'un dans l'autre.

De fait, le profilé supérieur (2) présente une zone sensiblement plane (7), qui se prolonge au niveau de ses deux extrémités par une zone recourbée (8), susceptible de rester sensiblement parallèle à une zone recourbée (9) ménagée au niveau du profilé inférieur (3).

Ces deux profilés (2) et (3) sont séparés l'un de l'autre, et cependant solidarisés l'un à l'autre au moyen d'un caoutchouc ou élastomère, tel qu'en SBR, destiné à absorber l'énergie susceptible de résulter d'un choc intervenant au niveau du profilé supérieur (2).

Cet élastomère présente une dureté voisine de 65 ShoreA, une résistance à la rupture de 14 MPa, et un allongement à la rupture de l'ordre de 350 %. En tout état de cause, une dureté comprise dans la fourchet de 60 à 70 Shore A est admissible, de même qu'une résistance à la rupture et un allongement à la rupture supérieurs aux valeurs précédemment indiquées, et respectivement comprises par exemple entre 14 et 23 MPa, et 350 et 440 %.

Au surplus, la DRC (déformation rémanente compression) est voisine de 22 heures à 70 °C.

De fait, l'élastomère est injecté entre les deux profilés lors de la réalisation des modules en question.

Compte-tenu des caractéristiques de cet élastomère, lors d'un choc intervenant au niveau du profilé extérieur (2), le matériau (6) est susceptible de fluer, et de manière générale de se déplacer, permettant ainsi une translation du profilé extérieur (2) par rapport au profilé inférieur (3), qui lui reste fixe et notamment solidarisé au moyen de ses pattes latérales (4) munies d'orifices traversants (5) sur la platine supérieure ou externe (22).

En outre, le module amortisseur (1) est muni d'un moyen (10), et notamment d'un écrou, solidarisé au profilé supérieur (2) par exemple par collage, orienté perpendiculairement par rapport à sa zone plane (7), et s'étendant en direction du profilé inférieur (3). Ce moyen (10) est destiné à recevoir une butée positive (25), telle que décrite ultérieurement en relation avec le butoir de l'invention.

A cet effet, ce moyen (10) est susceptible de traverser le profilé inférieur (3) au niveau d'un orifice (11) ménagé à cet effet au sein dudit profilé inférieur.

Il peut en outre être observé, notamment au niveau de la figure 1, que le module amortisseur est réalisé de telle sorte que le caoutchouc ou élastomère (6), même en l'absence de contrainte externe, donc de choc, traverse en partie ledit orifice (11), ainsi qu'on peut bien l'observer sur la figure 1.

Ce faisant, on limite le débattement latéral possible du profilé externe par rapport au profilé interne, un tel débattement pouvant se révéler avantageux, quand le choc n'est pas orienté de manière exactement perpendiculaire à la surface plane (7) du profilé externe.

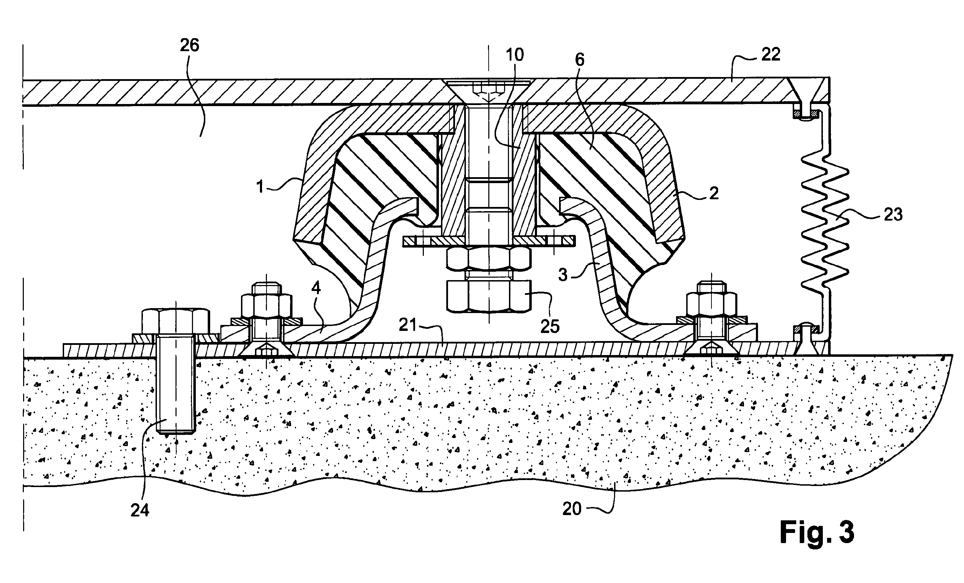

Le butoir de l'invention est davantage décrit avec les figures 3 à 6.

Fondamentalement, ce butoir comporte deux platines (21) et (22) parallèles entre elles. Ces platines sont rigides, et sont réalisées en tôle métallique, avantageusement traitées anti-corrosion. Un tel traitement peut résulter d'un revêtement à haute teneur Zn Ni.

La platine supérieure (22) est nettement plus épaisse que la platine inférieure (21), en raison du fait qu'elle est destinée à subir de plein fouet les chocs que le butoir est destiné à amortir.

Au surplus, elle peut être revêtue d'une couche d'élastomère colorée, de telle sorte à conférer une certaine cohérence décorative à l'ensemble, et mieux se fondre dans l'architecture considérée.

En revanche, la platine inférieure (21) est destinée à permettre la fixation du butoir contre la structure (20) à protéger, et notamment la face verticale du quai de chargement ou la face arrière du châssis de la remorque ou du camion. A cet effet, la platine (21) est munie d'un certain nombre d'orifices, régulièrement répartis sur sa surface, permettant l'introduction de vis ou de système d'ancrage (24) au sein de ladite structure, ledit système d'ancrage étant susceptible en outre, d'être complété par des chevilles chimiques, afin d'assurer la pérennité de l'ancrage, outre l'absence de tout mouvement de ladite platine inférieure (21).

Selon l'invention, ces deux platines (21) et (22) sont séparées l'une de l'autre, mais solidarisées l'une à l'autre, au moyen d'une pluralité des modules amortisseurs (1) du type de ceux précédemment décrits.

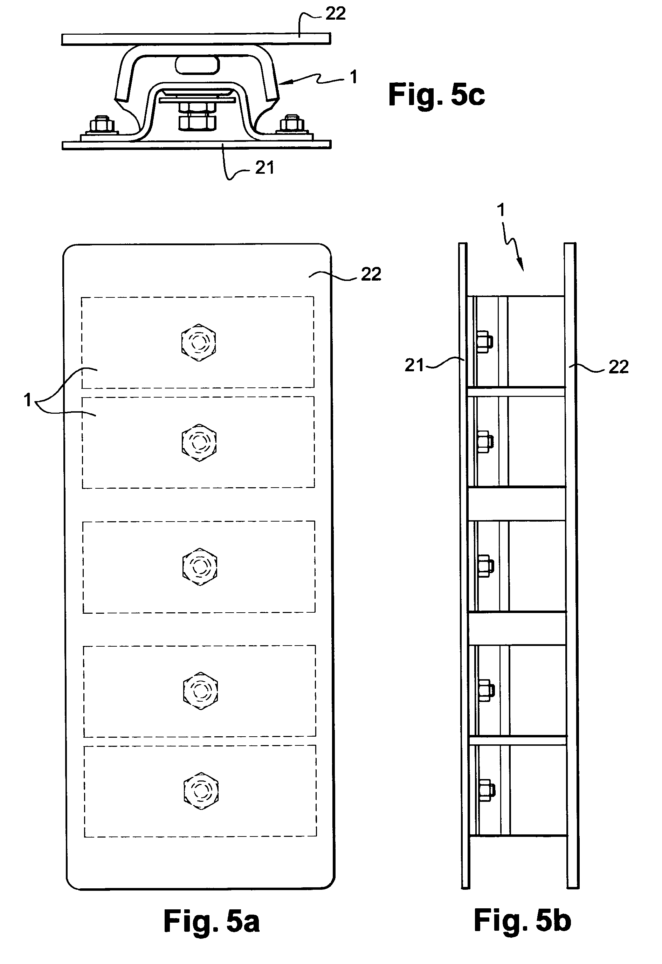

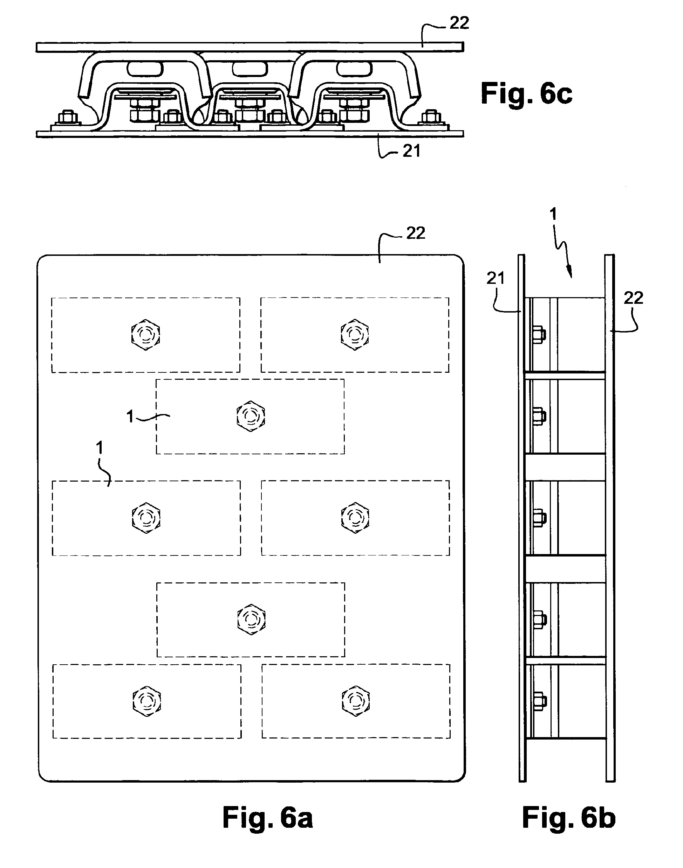

Au sein de la figure 3, bien évidemment dans l'optique de faciliter la compréhension des dessins, un seul de ces modules amortisseurs a été représenté. Cependant, il sera décrit ci-après plus en détail en relation avec les figures 5 et 6, deux configurations envisageables de la répartition de ces modules amortisseurs.

Dans cette hypothèse, les pattes de fixation (4) du profilé inférieur (3) des modules sont solidarisées, non pas directement sur la structure à protéger, mais sur la platine inférieure (21), ainsi qu'on peut bien l'observer sur la figure 3.

En outre, on a également représenté par la référence (23) un soufflet caoutchouc, propre à obturer l'espace inter-platines (26), et notamment éviter l'introduction à ce niveau de poussière, d'eau et d'autres produits pouvant tomber du camion ou des quais de chargement, et susceptibles de venir perturber le fonctionnement normale du butoir de l'invention.

Il convient en effet de rappeler qu'à titre exemplatif, la distance séparant les deux platines peut être voisine de dix centimètres.

Ce soufflet est réalisé en caoutchouc, avantageusement traité anti-ultraviolet, afin d'éviter sa dégradation dans le temps.

On a également représenté sur la figure 3, la butée positive (25), mentionnée précédemment, reçue au sein du moyen (10), également précité.

Cette butée positive (25) est destinée, en course maximum typiquement égale à 16 millimètres, à venir prendre appui contre la platine inférieure (21), et ainsi limiter le déplacement potentiel de la platine (22) par rapport à la platine (21). Sa longueur est choisie en fonction du déplacement jugé tolérable de la platine extérieure (22) par rapport à la platine inférieure (21) en fonction du caoutchouc (6) mis en oeuvre au sein des amortisseurs (1), dans l'objectif de ne pas aboutir trop rapidement d'une part, à sa fatigue et à sa dégradation, et d'autre part, à la déformation du profilé inférieur (3) des modules (1) lors d'un déplacement trop important du butoir, rendant alors inopérant ledit butoir.

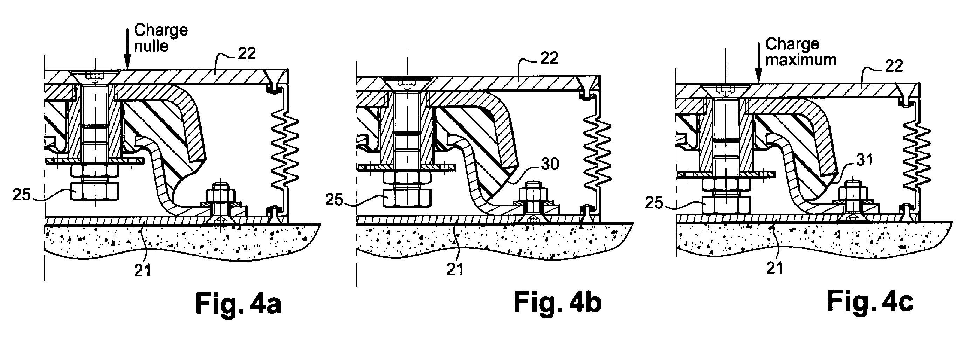

On a représenté en relation avec les figures 4a, 4b et 4c différentes positions du butoir en fonction des contraintes auxquelles il est susceptible d'être soumis.

Ainsi, la figure 4a correspond à l'absence de charge, donc de choc, la distance maximum entre les deux platines (21) et (22) étant voisine de 96 mm dans l'exemple décrit.

La figure 4b représente une position intermédiaire, dans lequel un choc a commencé à se produire. On peut observer en (30) un léger fluage du caoutchouc (6) entre les deux profilés constitutifs du module amortisseur (1), ce fluage intervenant au niveau des zones recourbées respectives desdits profilés.

Le soufflet (23), par son effet élastique, se comprime légèrement, et dans la forme décrite, la distance inter-platine dans cette configuration n'est plus que de 90 mm.

La figure 4c représente la charge maximum définie par le débattement de la butée positive (25), celle-ci venant prendre appui contre la platine inférieure (21). On observe un fluage plus important (31) du caoutchouc (6).

On aura bien compris qu'une grande partie de l'énergie résultant du choc est absorbée par le caoutchouc ou élastomère (6) injecté entre les deux profilés (2, 3) de chacun des modules amortisseurs (1), cette absorption résultant notamment de son déplacement, et notamment de son fluage.

Bien évidemment, de par les caractéristiques propres du caoutchouc ou de l'élastomère mis en oeuvre, lorsque le choc cesse, c'est-à-dire lorsque le camion n'exerce plus de pression contre la platine extérieure (22), celle-ci reprend sa position initiale fonctionnelle, en raison même de la rémanence dudit caoutchouc ou élastomère.

Selon l'énergie absorbable que l'on souhaite conférer au butoir, différentes configurations sont envisageables.

Dans une configuration relativement minimaliste, telle que représentée en figures 5a, 5b et 5c, le butoir ne comporte que cinq modules amortisseurs du type décrit en relation avec les figures 1 et 2. Ceux-ci sont répartis linéairement l'un en dessous de l'autre, ainsi qu'on peut bien l'observer sur la figure 5a.

Selon une configuration permettant une absorption plus importante représentée en relation avec les figures 6a, 6b et 6c, on met en oeuvre huit modules amortisseurs (1), répartis en trois colonnes, respectivement deux colonnes externes de trois modules et une colonne centrale de deux modules.

Bien évidemment, le nombre de configurations envisageables est déclinable à l'infini.

Au surplus, les caractéristiques, et notamment la dureté du matériau amortisseur, en l'espèce caoutchouc ou élastomère, peut être adaptée en fonction de l'intensité des chocs à absorber.

De par la mise en oeuvre de tels modules amortisseurs, les quais de chargement notamment sont protégés, puisqu'aucun choc direct n'intervient à leur niveau. Au surplus, attendu qu'une partie importante de l'énergie cinétique résultant des chocs en question est absorbée par le matériau amortisseur proprement dit, les contraintes auxquelles sont soumises la platine inférieure et la structure verticale sur laquelle elle est solidarisée sont largement diminuées, permettant d'augmenter de manière très significative la durée séparant deux réhabilitations successives de tels quais de chargement, et de sauvegarder l'intégrité des châssis des véhicules, notamment remorque et camion.

En raison même du meilleur amortissement des chocs, traditionnellement répétés pour les chauffeurs de par leur activité, le butoir conforme à l'invention permet également de diminuer de manière significative les troubles musculo squelettiques.

## Revendications

1. Butoir pour quai de chargement ou pour véhicule, comprenant deux platines rigides et parallèles entre elles :
- respectivement une platine inférieure (21), destinée à permettre de réaliser la fixation du butoir contre la paroi verticale du quai ou contre la face arrière du véhicule;
- et une platine supérieure ou externe (22), destinée à recevoir directement les chocs ; et les deux platines (21, 22) sont séparées l'une de l'autre au moyen d'une pluralité des modules amortisseurs de chocs
***caractérisé*** chacun des modules amortisseurs de chocs est constitué de deux profiles rigides s'emboîtant partiellement l'un dans l'autre, respectivement un profilé inférieur (3) et un profilé supérieur (2), séparés l'un de l'autre et solidarisés l'un à l'autre par un matériau amortisseur (6), le profilé inférieur étant muni de pattes de fixation (4) sur la plaine inférieure (21), le profilé supérieur (2) étant plus épais que le profilé inférieur (3) afin de lui conférer davantage de rigidité, et solidarisé à la platine supérieure ou externe (22), lesdits modules amortisseurs (1) étant plus ou moins régulièrement répartis entre lesdites platines, aux fins d'amortir le plus efficacement possible les chocs en question par absorption du maximum possible d'énergie cinétique.

2. Butoir selon la revendication 1, ***caractérisé* en ce que** chaque module amortisseur de chocs (1) est muni d'une butée positive (10, 25) solidaire du profilé supérieur (2), et s'étendant perpendiculairement par rapport à celui-ci, et susceptible de coulisser dans un orifice (11) ménagé au sein du profilé inférieur (3), pour venir prendre appui contre la structure à protéger ou la platine inférieure (21), et ainsi limiter la course de débattement possible du profilé supérieur (2).

3. Butoir selon la revendication 2, ***caractérisé* en ce que** ladite butée positive (10, 25) traverse ledit orifice (11) avec possibilité de débattement latéral limité.

4. Butoir selon la revendication 3, ***caractérisé* en ce** le matériau amortisseur (6) traverse ledit orifice (11) même en l'absence de choc.

5. Butoir selon l'une quelconque des revendications précédentes, ***caractérisé* en ce que** le matériau amortisseur (6) est constitué d'un élastomère, typiquement réalisé en SBR (Synthetic Butadiène Rubber) dont la dureté est comprise entre 60 et 70 Shore A.

6. Butoir selon l'une quelconque des revendications précédentes, ***caractérisé* en ce que** le matériau amortisseur (6) est constitué d'un élastomère, présentant un allongement à la rupture d'au moins de 350 %.

7. Butoir selon l'une quelconque des revendications précédentes, ***caractérisé* en ce que** le matériau amortisseur (6) est constitué d'un élastomère, présentant une résistance à la rupture d'au moins 14 MPa.

8. Butoir selon l'une quelconque des revendications précédentes, ***caractérisé en* ce que** le matériau amortisseur (6) est injecté entre les profilés supérieur (2) et inférieur (3).

9. Butoir selon l'une quelconque des revendications précédentes, ***caractérisé* en ce que** sa périphérie est obturée de manière élastique au moyen d'un soufflet (23), fixé respectivement à la platine supérieure (22) et à la platine inférieure (21), susceptible de s'adapter à la modification de l'espace (26) séparant lesdites platines en suite des chocs que ledit butoir est destiné à amortir, et propre à interdire l'intrusion d'eau ou d'objets dans ledit espace.

10. Butoir selon l'une quelconque des revendications précédentes, ***caractérisé* en ce que** la platine supérieure (22) est revêtue d'une couche d'élastomère colorée.

## Claims

1. Buffer for a loading bay or for a vehicle, including two rigid plates parallel to each other:
- respectively a lower plate (21), intended to allow the buffer to be attached to the vertical wall of the bay or to the rear face of the vehicle;
- and an upper or external plate (22), intended to receive the shocks directly; and the two plates (21, 22) are separated from one another by means of a plurality of shock damping modules
**characterized in that** each of the shock damping modules comprises two rigid sections partially fitting one into the other, a lower section (3) and an upper section (2) respectively, separated from one another and rigidly connected to one another by a damping material (6), the lower section being fitted with lugs (4) for attachment to the lower plate (21), the upper section (2) being thicker than the lower section (3) to confer further rigidity thereupon and rigidly connected to the upper or external plate (22), said damping modules (1) being more or less evenly distributed between said plates, for the purposes of damping the shocks in question as effectively as possible by absorbing the maximum possible amount of kinetic energy.

2. Buffer as claimed in claim 1, **characterized in that** each shock damping module (1) is fitted with a positive stop (10, 25) secured to the upper section (2), and extending perpendicularly relative thereto, and capable of sliding into an orifice (11) provided in the lower section (3), so that it can press against the structure to be protected or lower plate (21), thereby limiting any potential displacement travel of the upper section (2).

3. Buffer as claimed in claim 2, **characterized in that** said positive stop (10, 25) passes through said orifice (11) with limited potential for lateral displacement.

4. Buffer as claimed in claim 3, **characterized in that** the damping material (6) passes through said orifice (11) even in the absence of a shock.

5. Buffer as claimed in any one of the previous claims, **characterized in that** the damping material (6) comprises an elastomer, typically made of SBR (Synthetic Butadiene Rubber) whereof the hardness is between 60 and 70 Shore A.

6. Buffer as claimed in any one of the previous claims, **characterized in that** the damping material (6) comprises an elastomer that has an elongation at break of at least 350%.

7. Buffer as claimed in any one of the previous claims, **characterized in that** the damping material (6) comprises an elastomer that has a tensile strength of at least 14 MPa.

8. Buffer as claimed in any one of the previous claims, **characterized in that** the damping material (6) is injected between the upper (2) and lower (3) sections.

9. Buffer as claimed in any one of the previous claims, **characterized in that** its periphery is sealed resiliently by means of bellows (23), attached to the upper plate (22) and to the lower plate (21) respectively, and capable of adapting itself to changes in the space (26) separating said plates subsequent to the shocks that said buffer is intended to dampen, and suitable for preventing the intrusion of water or objects into said space.

10. Buffer as claimed in any one of the previous claims, **characterized in that** the upper plate (22) is coated with a layer of coloured elastomer.

## Patentansprüche

1. Prellvorrichtung für eine Laderampe oder ein Fahrzeug, zwei starre und zueinander parallele Platten umfassend:
- eine untere Platte (21), die dazu bestimmt ist, die Befestigung der Prellvorrichtung an der vertikalen Wand der Rampe oder an der Rückseite des Fahrzeugs herzustellen;
- bzw. eine obere oder äußere Platte (22), die dazu bestimmt ist, Stöße direkt aufzunehmen; und wobei die beiden Platten (21, 22) mittels mehrerer Stoßdämpfermodule voneinander getrennt sind,
**dadurch gekennzeichnet, dass** jedes der Stoßdämpfermodule aus zwei starren, teilweise ineinandergesteckten Profilen, einem unteren Profil (3) bzw. einem oberen Profil (2) besteht, die voneinander getrennt und über ein Dämpfungsmaterial (6) fest miteinander verbunden sind, wobei das untere Profil mit Laschen (4) zur Befestigung an der oberen Platte (21) ausgestattet ist, wobei das obere Profil (2) dicker ist als das untere Profil (3), um ihm mehr Steifigkeit zu verleihen, und an der oberen oder äußeren Platte (22) befestigt ist, wobei die Dämpfermodule (1) mehr oder weniger regelmäßig zwischen den Platten verteilt sind, um die betreffenden Stöße mit größtmöglicher Wirksamkeit durch Auffangen der meistmöglichen kinetischen Energie zu dämpfen.

2. Prellvorrichtung nach Anspruch 1, **dadurch gekennzeichnet, dass** jedes Stoßdämpfermodul (1) mit einem positiven Anschlag (10, 25) ausgestattet ist, der fest mit dem oberen Profil (2) verbunden ist und sich in Bezug auf dieses senkrecht erstreckt, und in einer im Inneren des unteren Profils (3) ausgebildeten Öffnung (11) gleiten kann, um an der zu schützenden Struktur oder der unteren Platte (21) in Anlage zu gelangen und somit den möglichen Ausfederungsweg des oberen Profils (2) zu begrenzen.

3. Prellvorrichtung nach Anspruch 2, **dadurch gekennzeichnet, dass** der positive Anschlag (10, 25) die Öffnung (11) mit einer Möglichkeit zu seitlicher Ausfederung durchquert.

4. Prellvorrichtung nach Anspruch 3, **dadurch gekennzeichnet, dass** das Dämpfungsmaterial (6) selbst bei Nichtvorhandensein von Stößen die Öffnung (11) durchquert.

5. Prellvorrichtung nach einem der vorhergehenden Ansprüche, **dadurch gekennzeichnet, dass** das Dämpfungsmaterial (6) aus einem Elastomer besteht, das typischerweise aus SBR (Synthetic Butadiene Rubber, also synthetischem Butadien-Kautschuk) hergestellt ist, dessen Härte zwischen 60 und 70 Shore A beträgt.

6. Prellvorrichtung nach einem der vorhergehenden Ansprüche, **dadurch gekennzeichnet, dass** das Dämpfungsmaterial (6) aus einem Elastomer besteht, das eine Bruchdehnung von mindestens 350% aufweist.

7. Prellvorrichtung nach einem der vorhergehenden Ansprüche, **dadurch gekennzeichnet, dass** das Dämpfungsmaterial (6) aus einem Elastomer besteht, das eine Reißfestigkeit von mindestens 14 MPa aufweist.

8. Prellvorrichtung nach einem der vorhergehenden Ansprüche, **dadurch gekennzeichnet, dass** das Dämpfungsmaterial (6) zwischen dem oberen (2) und unteren (3) Profil eingespritzt ist.

9. Prellvorrichtung nach einem der vorhergehenden Ansprüche, **dadurch gekennzeichnet, dass** ihr Umfang mittels eines Balgs (23) auf elastische Weise verschlossen ist, der an der oberen Platte (22) bzw. der unteren Platte (21) befestigt ist und sich an die Veränderung des die beiden Platten trennenden Raums (26) infolge von Stößen, die die Prellvorrichtung zu dämpfen bestimmt ist, anpassen kann, und dazu geeignet ist, das Eindringen von Wasser und Gegenständen in den Raum zu verhindern.

10. Prellvorrichtung nach einem der vorhergehenden Ansprüche, **dadurch gekennzeichnet, dass** die obere Platte (22) mit einer farbigen Elastomerschicht beschichtet ist.
